# EUROPEAN PATENT APPLICATION

(11) **EP 3 213 799 A1**
(43) Date of publication of application: **06.09.2017**
(21) Application number: 17157903.0
(22) Date of filing: 24.02.2017
(51) Int. Cl.: A63F 13/25, A63F 13/428, A63F 13/211, A63F 13/5255, A63F 13/212, A63F 13/28, A63F 13/98, A63F 13/285

(54) **TRACKER DEVICE OF VIRTUAL REALITY SYSTEM**

(30) Priority: 02.03.2016 US 201662302198 P; 23.02.2017 US 201715439949
(71) Applicant: HTC Corporation, Taoyuan City 330 (TW)
(72) Inventor: HUANG, Tsung-Nung, 231 New Taipei City (TW)
(74) Representative: Ljungberg, Robert

(57) **Abstract**

A virtual reality system is operable to communicate with an accessory device. The virtual reality system includes a host device and a tracker device. The tracker device can be removably mounted on the accessory device and communicated with the host device. The tracker device is configured to generate a first positioning data of the tracker device relative to a reference point in a spatial environment. The tracker device is further configured to transmit the first positioning data to the host device.

## Description

### RELATED APPLICATIONS

This application claims priority to U.S. Provisional Application Serial Number 62/302,198, filed March 2, 2016, which is herein incorporated by reference.

### BACKGROUND

### Field of Invention

The present application relates to a virtual reality system. More particularly, the present application relates to an attachable device to accessories in the virtual reality system.

### Description of Related Art

In the current virtual reality (VR) environment, controller devices are commonly used to interact with VR scenes, such as game themes or VR contents. Usually, one virtual reality system is compatible with limited types of official accessories, such as controllers, sensors, touchpads or speakers.

Various types of controllers are developed to be used in different applications or purposes. For example, a rifle-shaped controller with a pull trigger will be developed by a producer of a shooting game, and a steering wheel game controller will be developed for a shooting game by another producer of a racing game. It will be difficult for a virtual reality system to compatible all kinds of controller designed by different manufacturers.

An accessory made by one manufacturer may not accepted by a virtual reality system made by another manufacturer. In other words, the virtual reality system has a poor compatibility to non-official accessories or 3rd party accessories.

### SUMMARY

The disclosure provides a virtual reality system, which includes a host device and a tracker device. The virtual reality system is operable to communicate with an accessory device. The tracker device is capable of being removably mounted on the accessory device and communicated with the host device. The tracker device is configured to generate a first positioning data of the tracker device relative to a reference point in a spatial environment. The tracker device is further configured to transmit the first positioning data to the host device.

The disclosure provides a tracker device which is capable of being removably mounted on an accessory device. The tracker device includes a first interface unit, a second interface unit and a tracker unit. The first interface unit is configured for communicating with a host device of a virtual reality system. The second interface unit is configured for communicating with the accessory device. The tracker unit is configured for generate a first positioning data of the tracker device relative to a reference point in a spatial environment. The first positioning data is transmitted to the host device through the first interface unit.

It is to be understood that both the foregoing general description and the following detailed description are by examples, and are intended to provide further explanation of the invention as claimed.

### BRIEF DESCRIPTION OF THE DRAWINGS

The disclosure can be more fully understood by reading the following detailed description of the embodiment, with reference made to the accompanying drawings as follows:
FIG. 1A is a schematic diagram illustrating a virtual reality system according to an embodiment of this disclosure.
FIG. 1B is a functional block diagram illustrating the virtual reality system shown in FIG. 1A.
FIG. 2A is a schematic diagram illustrating the virtual reality system interacted with another accessory device in another embodiment of this disclosure.
FIG. 2B is a functional block diagram illustrating the virtual reality system interacted with the accessory device shown in FIG. 2A.
FIG. 3A is a schematic diagram illustrating the virtual reality system interacted with another accessory device in another embodiment of this disclosure.
FIG. 3B is a functional block diagram illustrating the virtual reality system interacted with the accessory device shown in FIG. 3A.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

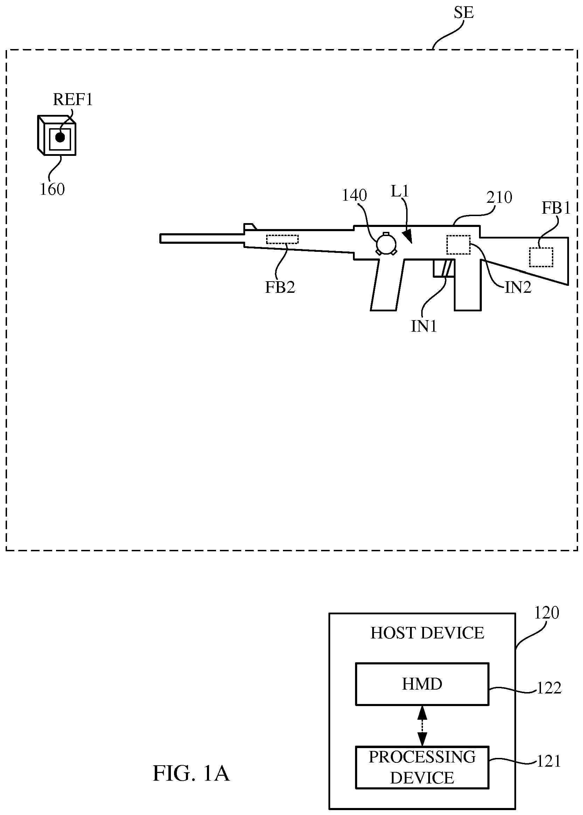

Reference is made to FIG. 1A, which is a schematic diagram illustrating a virtual reality (VR) system 100 according to an embodiment of this disclosure. As shown in FIG. 1A, the virtual reality system 100 includes a host device 120 and a tracker device 140. The virtual reality system 100 is operable to communicate with an accessory device 210. The tracker device 140 can be mounted on the accessory device 210. As shown in FIG. 1A, the tracker device 140 is physically fastened on the accessory device 210 by a connector such as a screw, a clamp, a buckle or any equivalent connector to mount the tracker device 140 onto the accessory device 210.

On the other hand, the tracker device 140 can be remove from the accessory device 210 by unfasten the connector. For example, when a user purchase a new accessory device, the user can remove the tracker device 140 from the accessory device 210, and attach the tracker device 140 onto the new accessory device (not shown in FIG. 1A). In other words, the tracker device 140 is reusable and independent from the accessory device 210.

In this embodiment, the host device 120 includes a processing device 121 and a head-mount display (HMD) 122. The head-mount display 122 is wearable on a user. When the user wears a VR headset with the head-mount display 122, the head-mount display 122 will cover visions of the user, and the head-mount display 122 is configured for displaying a virtual reality scene to the user. The processing device 121 is utilized to compute displaying data related to the virtual reality scene, receive input command from the user, and generate feedback output (e.g., a sound or a vibration, an illumination signal related to the virtual reality scene) toward the user.

In an embodiment, the processing device 121 can include a computer, a VR server, a smartphone, a gaming console or any device capable of controlling and driving the head-mount display 122.

In another embodiment, the processing device 121 and the head-mount display 122 can be integrated on a VR headset together. In this case, the processing device 121 is a processor or a control circuit implemented on the VR headset.

In still another embodiment, the processing device 121 and the head-mount display 122 can be implemented by one smartphone. In this case, the smartphone includes a display panel as the head-mount display 122 and a processor as the processing device 121.

The accessory device 210 shown in FIG. 1A is a rifle-shaped controller. The accessory device 210 can be an official accessory device developed by the manufacturer of the virtual reality system 100 or a non-official accessory device developed by a 3rd party supplier. When the accessory device 210 is the non-official accessory device developed by a 3rd party supplier, the host device 120 may not be able communicate with the accessory device 210 directly. The accessory device 210 may have different functions and generate different input-output data related to the virtual reality system 100. The tracker device 140 in this embodiment can be utilized as a bridge to interchange the data between the host device 120 and the accessory device 210. The host device 120 and the accessory device 210 communicate to each other (indirectly) through the tracker device 140. Through the tracker device 140, the host device 120 is able to communicate with the accessory device 210, such that the virtual reality system 100 is compatible with the accessory device 210, even when the accessory device 210 is the non-official accessory device developed by a 3rd party supplier.

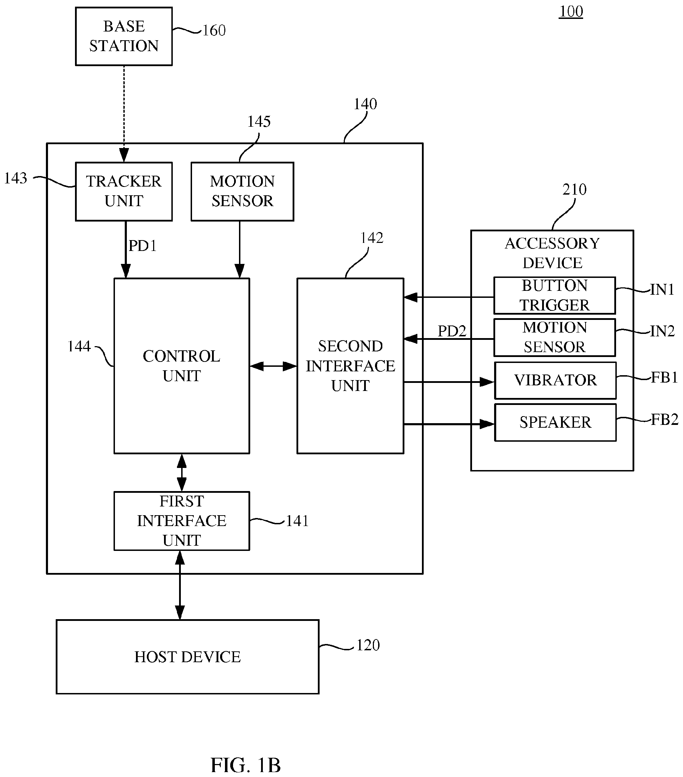

Reference is also made to FIG. 1B, which is a functional block diagram illustrating the virtual reality system 100 shown in FIG. 1A. As shown in FIG. 1B, the tracker device 140 includes a first interface unit 141, a second interface unit 142, a tracker unit 143, a control unit 144 and a motion sensor 145. The control unit 144 is coupled to the first interface unit 141, the second interface unit 142, the tracker unit 143 and the motion sensor 145.

The first interface unit 141 of the tracker device 140 is configured for communicating with the host device 120. The first interface unit 141 can include a physical connector (e.g., a USB connector or a cable connector) to the host device 120, or include a wireless communication transceiver (e.g., based on Bluetooth, WiFi, BLE, WiFi-direct or Zigbee, etc) to the host device 120.

The second interface unit 142 of the tracker device 140 is configured for communicating with the accessory device 210. The second interface unit 142 can include a physical connector (e.g., a USB connector or a cable connector) to the host device 120, or include a wireless communication transceiver (e.g., based on Bluetooth, WiFi, BLE, WiFi-direct or Zigbee, etc) to the accessory device 210.

As shown in FIG. 1A, when the user manipulate the accessory device 210 in a spatial environment SE, a location of the accessory device 210 within the spatial environment SE is really important to the virtual reality system 100.

As shown in FIG. 1A and FIG. 1B, the tracker unit 143 of the tracker device 140 is configured for generate a first positioning data PD1 of the tracker device 140 relative to a reference point REF1 in the spatial environment SE. The first positioning data PD1 is transmitted to the host device 120 through the first interface unit 141, such that the host device 120 can tracks a location L1 of the accessory device 210 in the spatial environment SE at least according to the first positioning data PD1 obtained by the tracker unit 143 of the tracker device 140.

In an embodiment, the virtual reality system 100 includes a base station 160. The base station 160 is located at the reference point REF1 and configured for emitting an optical radiation. The tracker unit 143 of the tracker device 140 includes an optical sensor array. The optical sensor array, which includes multiple optical sensors, is able to detect the optical radiation sent from the base station 160. Each of the optical sensors is disposed on different positions on the tracker device 140, and each of the optical sensors will receive the optical radiation with slightly difference timings (and radiation strengths). Based on the differences of the timings (or the radiation strengths) and known distances between the optical sensors, a distance and an angle between the reference point REF1 and the tracker unit 143 can be detected. Accordingly, the tracker unit 143 can generate the first positioning data PD1 of the tracker device 140 relative to the reference point REF1.

In another embodiment, the base station 160 is located at the reference point REF1 and configured for emitting an ultrasound wave. The tracker unit 143 of the tracker device 140 includes a microphone array. The microphone array, which includes multiple microphone sensors, is able to detect the ultrasound wave sent from the base station 160. Each of the microphone sensors is disposed on different positions on the tracker device 140, and each of the microphone sensors will receive the ultrasound wave with slightly difference timings (and sound strengths). Based on the differences of the timings (or the sound strengths) and known distances between the microphone sensors, a distance and an angle between the reference point REF1 and the tracker unit 143 can be detected. Accordingly, the tracker unit 143 can generate the first positioning data PD1 of the tracker device 140 relative to the reference point REF1.

In still another embodiment, the base station 160 is not required. There is a token or an icon located at the reference point REF1. The tracker unit 143 of the tracker device 140 includes a proximity sensor. The proximity sensor is configured to detect a distance toward the reference point REF1. For example, the proximity sensor includes a camera, the proximity sensor determine the distance toward the reference point REF1 according to a size of the token or the icon captured by the camera. The tracker unit 143 of the tracker device 140 generates the first positioning data PD1 according to the distance detected by the proximity sensor.

After the first positioning data PD1 in aforesaid embodiments are generated by the tracker unit 143, the control unit 144 collects the first positioning data PD1 and sends the first positioning data PD1 to the host device 120 through the first interface unit 141. Since the tracker device 140 is fastened on the accessory device 210, the tracker device 140 and the accessory device 210 will move together when the user manipulate the accessory device 210. Therefore, the host device 120 can approximately acquire the location L1 of the accessory device 210 based on the first positioning data PD1.

In addition, the tracker device 140 further includes a motion sensor 145. The motion sensor 145 is configured to calibrate the first positioning data PD1 detected by the tracker unit 143. The motion sensor 145 on the tracker device 140 can be a 3-axis gyroscope, a 3-axis accelerometer or an inertial measurement unit.

In an embodiment, the first positioning data PD1 detected by the tracker unit 143 includes X/Y coordinates (or X/Y/Z coordinates) of the location L1. The motion sensor 145 may provide acceleration data over times. For example, the acceleration data indicates how the tracker device 140 moves in a specific time period. When the acceleration data is known, a displacement of the coordinates between two time points should have a certain correlation with the acceleration data. The acceleration data detected by the motion sensor 145 can be utilized to verify/compensate the coordinates of the location L1 detected by the tracker unit 143 at different time points. In this case, the acceleration data and/or rotational vectors detected by the motion sensor 145 may elevate a preciseness of the first positioning data PD1 detected by the tracker unit 143.

In another embodiment, the first positioning data PD1 detected by the tracker unit 143 includes X/Y coordinates (or X/Y/Z coordinates) of the location L1. The motion sensor 145 may provide rotational vectors of the tracker device 140. For example, the rotational vectors indicate an orientation of the tracker device 140 (e.g., upward, downward, or along a directional angle). The rotational vectors provide additional information other than the coordinates of the location L1 detected by the tracker unit 143. The rotational vectors detected by the motion sensor 145 can be combined into the first positioning data PD1 and sent to the host device 120, such that when the user rotates the rifle (i.e., the accessory device 210 fastened with the tracker unit 143), a corresponding object in the virtual reality scene will rotate accordingly.

As shown in FIG. 1A and FIG. 1B, the accessory device 210 includes a button trigger IN1, a motion sensor IN2, a vibrator FB1 and a speaker FB2. The motion sensor IN2 of the accessory device 210 is configured to generate a second positioning data PD2 of the accessory device 210. The tracker device 140 receives the second positioning data PD2 from the accessory device 210 and transmits the second positioning data PD2 along with the first positioning data PD1 to the host device 120. In this case, the host device 120 tracks the location L1 of the accessory device 210 in the spatial environment SE according to the first positioning data PD1 and also the second positing data PD2. The second positing data PD2 is used as an auxiliary to track the location L1 of the accessory device 210, so as to increase preciseness in tracking the location L1 of the accessory device 210, or to speed up the calculation in tracking the location L1. The motion sensor IN2 can be a 3-axis gyroscope, a 3-axis accelerometer or an inertial measurement unit.

In this case, the accessory device 210 comprises a condition input sensor (e.g., the button trigger IN1) for generating a condition input data. When the user pulls the button trigger, the condition input data will be generated and sent from the accessory device 210 through the tracker device 140 to the host device 120. The host device 120 will acknowledge that the user pulls the button trigger IN1 on the accessory device 210, and fire a virtual weapon in the virtual reality scene. The condition input sensor in this embodiment is the button trigger IN1, but the disclosure is not limited thereto. The condition input sensor can be a pressure sensor, a button trigger, a touch sensor or a motion sensor implemented on the accessory device 210.

Since the virtual weapon in the virtual reality scene is fired according the input command, the virtual reality system 100 may generate some feedback effect correspondingly. The host device 120 is configured to generate a feedback data (e.g., a sound and a vibration caused by the shooting of the rifle) corresponding to the virtual reality scene created by the virtual reality system. The feedback data is sent from the host device 120 and received by the tracker device 140. Then, the tracker device 140 can transmit the feedback data to the accessory device 210. In this case, the accessory device 210 includes feedback output components (e.g., the vibrator FB1 and the speaker FB2). In response to the feedback data, the vibrator FB1 will vibrate corresponding to the shooting in the virtual reality scene, and also the speaker FB2 will broadcast a sound corresponding to the shooting in the virtual reality scene.

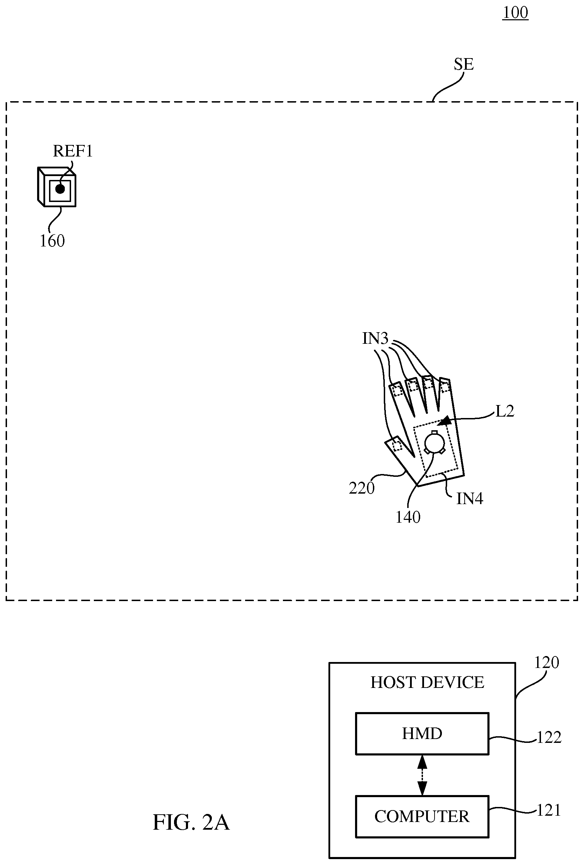

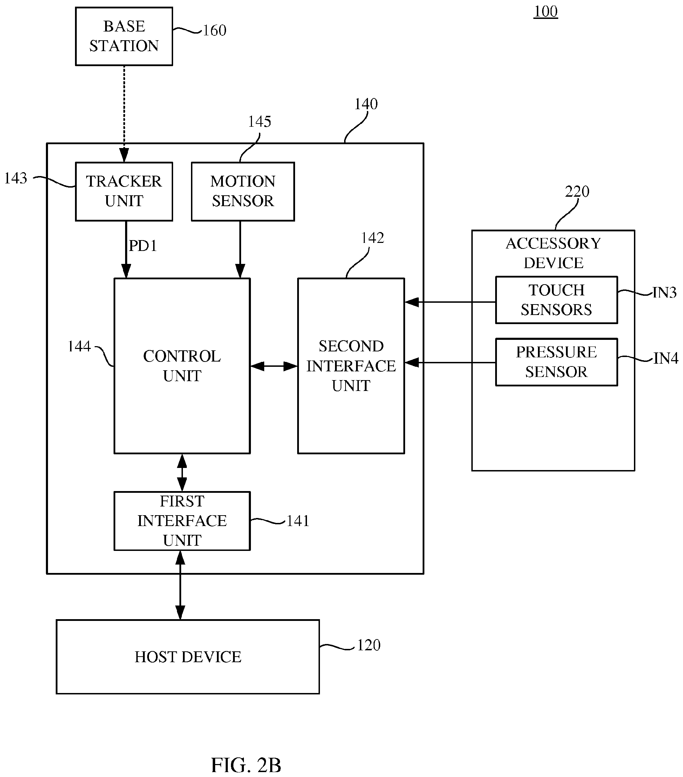

The accessory device 210 shown in FIG. 1A and FIG. 1B are utilized to demonstrate the disclosure, but the disclosure is not limited thereto. Reference is also made to FIG. 2A and FIG. 2B. FIG. 2A is a schematic diagram illustrating the virtual reality system 100 interacted with another accessory device 220 in another embodiment of this disclosure. FIG. 2B is a functional block diagram illustrating the virtual reality system 100 interacted with the accessory device 220 shown in FIG. 2A.

Given a situation that the user purchases the accessory device 220 from another manufacturer, the same tracker device 140 mentioned in aforesaid embodiments in FIG. 1A and FIG. 1B can be utilized onto the accessory device 220 in FIG. 2A and FIG. 2B. The user can remove the tracker device 140 from the accessory device 210 in FIG. 1A and FIG. 1B and mount the tracker device 140 onto a glove as shown in FIG. 2A and FIG. 2B.

As shown in FIG. 2B, the tracker device 140 includes a first interface unit 141, a second interface unit 142, a tracker unit 143, a control unit 144 and a motion sensor 145. The control unit 144 is coupled to the first interface unit 141, the second interface unit 142, the tracker unit 143 and the motion sensor 145. The tracker device 140 has the same components as the embodiments shown in FIG. 1A and FIG. 1B. The functions and the behavior of these components (the first interface unit 141, the second interface unit 142, the tracker unit 143, the control unit 144 and the motion sensor 145) are explained in aforesaid embodiment and not repeated here.

As shown in FIG. 2A and 2B, the accessory device 220 include two sets of condition input sensors, which are touch sensors IN3 disposed on finger tips on the glove and a pressure sensor IN4 disposed on a palm area of the glove. The touch sensors IN3 are utilized to sense whether the user touch an object on each of the fingers. The pressure sensor IN4 is utilized to sense whether the user grip, grasp or hold an object in his hand wearing the glove. The touch sensors IN3 and the pressure sensor IN4 will generate condition input data corresponding to the touch input signals and/or the pressure input signal. The tracker device 140 receives the condition input data from the accessory device 220 and transmits the condition input data to the host device 120.

It is noted that the accessory device 220 does not include any positioning unit or any motion sensor. Therefore, the accessory device 220 is incapable of measuring any positioning data in the spatial environment SE. The tracker unit 143 of the tracker device 140 will generate the first positioning data PD1 and transmit the first positioning data PD1 to the host device 120. In this case, the host device 120 is able to track a location L2 of the accessory device 220 in the spatial environment SE according to the first positioning data PD1 obtained by the tracker device 140, even though the accessory device 220 is incapable of measuring any positioning data in the spatial environment SE.

Based on this embodiment, the tracker device 140 is able to transform an accessory device without a tracking function into an accessory device which is trackable by the host device 120 of the virtual reality system 100. In addition, the tracker device 140 in this embodiment can be utilized as a bridge to interchange the data between the host device 120 and the accessory device 220. The host device 120 and the accessory device 220 communicate to each other (indirectly) through the tracker device 140.

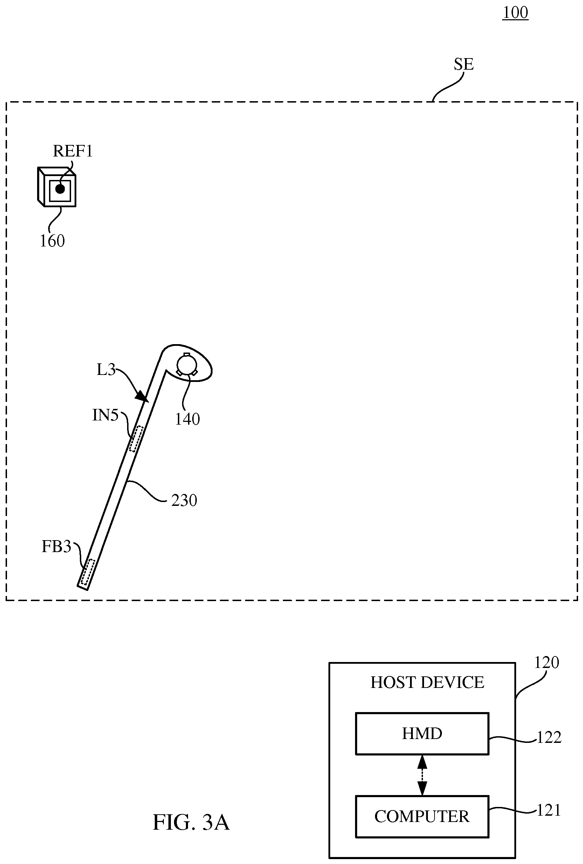

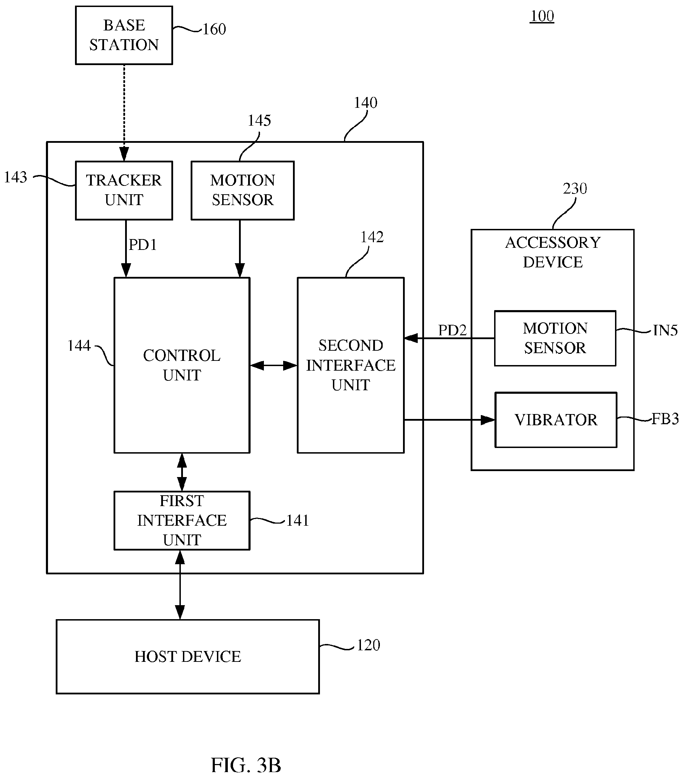

Reference is also made to FIG. 3A and FIG. 3B. FIG. 3A is a schematic diagram illustrating the virtual reality system 100 interacted with another accessory device 230 in another embodiment of this disclosure. FIG. 3B is a functional block diagram illustrating the virtual reality system 100 interacted with the accessory device 230 shown in FIG. 3A.

Furthermore, the same tracker device 140 mentioned in aforesaid embodiments in FIG. 1A, FIG. 1B, FIG. 2A and FIG. 2B can be utilized onto the accessory device 230 in FIG. 3A and FIG. 3B. The user can mount the tracker device 140 onto a golf club as shown in FIG. 3A and FIG. 3B.

As shown in FIG. 3B, the tracker device 140 includes a first interface unit 141, a second interface unit 142, a tracker unit 143, a control unit 144 and a motion sensor 145. The control unit 144 is coupled to the first interface unit 141, the second interface unit 142, the tracker unit 143 and the motion sensor 145. The tracker device 140 has the same components as the embodiments shown in FIG. 1A and FIG. 1B. The functions and the behavior of these components (the first interface unit 141, the second interface unit 142, the tracker unit 143, the control unit 144 and the motion sensor 145) are explained in aforesaid embodiment and not repeated here.

As shown in FIG. 3A and 3B, the accessory device 230 includes a motion sensor IN5 and a feedback output component (the vibrator FB3). In this case, the motion sensor IN5 can generate condition input data (about how fast and how hard the user swings the golf club) with the accessory device 230. The condition input data generated by the motion sensor IN5 can be sent to the host device 120 through the tracker device 140.

In addition, the motion sensor IN5 of the accessory device 230 is configured to generate a second positioning data PD2 of the accessory device 230. The tracker device 140 receives the second positioning data PD2 from the accessory device 230 and transmits the second positioning data PD2 along with the first positioning data PD1 obtained by the tracker unit 143 to the host device 120. In this case, the host device 120 tracks the location L3 of the accessory device 230 in the spatial environment SE according to the first positioning data PD1 and also the second positing data PD2. The second positing data PD2 is used as an auxiliary to track the location L3 of the accessory device 230, so as to increase preciseness in tracking the location L3 of the accessory device 230, or to speed up the calculation in tracking the location L3. The motion sensor IN5 can be a 3-axis gyroscope, a 3-axis accelerometer or an inertial measurement unit.

When the user hit a golf ball in the virtual reality scene, the host device 120 may generate a feedback data (e.g., a vibration occurs when the golf club hits the golf ball) corresponding to the virtual reality scene created by the virtual reality system 100, the tracker device 140 receives the feedback data from the host device 120 and transmit the feedback data to the accessory device 230. In response to the feedback data, the feedback output component (the vibrator FB3) will vibrate corresponding to the hitting event in the virtual reality scene.

It is noted that the tracker device 140 is suitable to various types of the accessory devices. Even though the accessory devices may include different components or different configurations, the tracker device 140 is suitable to be an intermediary device between the host device 120 of the virtual reality system 100 and each kind of accessory devices. Based on the tracker device 140, the virtual reality system 100 will be compatible to various kinds of accessory devices provided by the official manufacturer or 3rd party manufacturers. The tracker device 140 also helps to reduce the production cost of the accessory devices, because the tracker components are no longer necessary parts of every accessory device.

Although the present invention has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A virtual reality system, operable to communicate with an accessory device, the virtual reality system comprising:
a host device;
a tracker device, capable of being removably mounted on the accessory device and
communicated with the host device, the tracker device being configured to:
generate a first positioning data of the tracker device relative to a reference point in a spatial environment; and
transmit the first positioning data to the host device.

2. The virtual reality system of claim 1, wherein the accessory device comprises a motion sensor, the motion sensor is configured to generate a second positioning data of the accessory device, the tracker device receives the second positioning data from the accessory device and transmits the second positioning data to the host device.

3. The virtual reality system of claim 2, wherein the host device tracks a location of the accessory device in the spatial environment according to the first positioning data and the second positing data, the second positing data is used as an auxiliary to track the location of the accessory device.

4. The virtual reality system of claim 1, wherein the accessory device comprises a condition input sensor for generating a condition input data, the tracker device receives the condition input data from the accessory device and transmits the condition input data to the host device.

5. The virtual reality system of claim 1, wherein the virtual reality system further comprises a base station, the base station is located at the reference point and configured for emitting an optical radiation, the tracker device comprises an optical sensor array, the optical sensor array is configured to detect the optical radiation sent from the base station and generate the first positioning data of the tracker device relative to the reference point.

6. The virtual reality system of claim 1, wherein the tracker device comprises a motion sensor, the motion sensor is configured to calibrate the first positioning data.

7. The virtual reality system of claim 1, wherein the tracker device comprises a first interface unit for communicating with the host device and a second interface unit for communicating with the accessory device, the host device and the accessory device communicate to each other through the tracker device.

8. The virtual reality system of claim 1, wherein the host device is configured to generate a feedback data corresponding to a virtual reality scene created by the virtual reality system, wherein the tracker device receives the feedback data from the host device and transmit the feedback data to the accessory device, wherein the accessory device comprises a feedback output component, in response to the feedback data, the feedback output component is configured for vibrating, illuminating or broadcasting a sound corresponding to the virtual reality scene.

9. The virtual reality system of claim 1, wherein the host device further comprises a head-mounted display, a computer, a smartphone or a gaming console.

10. A tracker device, capable of being removably mounted on an accessory device, the tracker device comprising:
a first interface unit, configured for communicating with a host device of a virtual reality system;
a second interface unit, configured for communicating with the accessory device; and
a tracker unit, configured for generating a first positioning data of the tracker device relative to a reference point in a spatial environment, the first positioning data being transmitted to the host device through the first interface unit.

11. The tracker device of claim 10, wherein the virtual reality system further comprises a base station, the base station is located at the reference point and configured for emitting an optical radiation, the tracker unit comprises an optical sensor array, the optical sensor array is configured to detect the optical radiation sent from the base station and generate the first positioning data of the tracker device relative to the reference point.

12. The tracker device of claim 10, wherein the virtual reality system further comprises a base station, the base station is located at the reference point and configured for emitting an ultrasound wave, the tracker unit comprises a microphone array, the microphone array is configured to detect the ultrasound wave sent from the base station and generate the first positioning data of the tracker device relative to the reference point.

13. The tracker device of claim 10, wherein the tracker unit comprises a proximity sensor, the proximity sensor is configured to detect a distance toward the reference point, the tracker device generates the first positioning data according to the distance detected by the proximity sensor.

14. The tracker device of claim 10, wherein the tracker device comprises a motion sensor, the motion sensor is configured to calibrate the first positioning data generated by the tracker unit.

15. The tracker device of claim 14, wherein the motion sensor comprises a 3-axis gyroscope, a 3-axis accelerometer or an inertial measurement unit.
